# EUROPEAN PATENT APPLICATION

(11) **EP 2 600 633 A2**
(43) Date of publication of application: **05.06.2013**
(21) Application number: 12174653.1
(22) Date of filing: 02.07.2012
(51) Int. Cl.: H04N 21/482, H04N 21/432, H04N 21/81

(54) **Display apparatus and control method thereof**

(30) Priority: 29.11.2011 KR 20110125709
(71) Applicant: Samsung Electronics Co., Ltd., Suwon-si, Gyeonggi-do, 443-742 (KR)
(72) Inventor: Choi, Seung-hyuk, Gyeonggi-do (KR)
(74) Representative: Hewett, Jonathan Michael Richard

(57) **Abstract**

A control method of a display apparatus and a display apparatus displaying a video, the control method of a display apparatus includes: displaying a plurality of videos provided from a video source; generating and storing at least one selectable still image from the plurality of provided videos; displaying the at least one selectable still image to be selectable; and receiving a streaming video corresponding to the selected still image from the at least one displayed selectable still image from a server; and displaying the streaming video based on metadata derived to correspond to the selected still image.

## Description

The present invention relates to a display apparatus displaying a video and a control method thereof, and more particularly to a display apparatus having a structure of displaying a streaming video provided by a server, linking with a broadcast video provided by a broadcast station, and a control method thereof.

A display apparatus processes video signals input from external video sources in various ways and displays videos based on the video signals on a display panel, such as a liquid crystal display (LCD). A display apparatus available to general users is configured as a TV or a monitor. For example, a display apparatus configured as a TV conducts various processes, such as tuning and decoding, on broadcast signals received from the outside, thereby providing videos of broadcast channels desired by users.

A display apparatus may or may not perform functions to control the display of videos, such as time shifting which enables watching a desired video at a convenient time, depending on characteristics of a video source providing video signals. For example, when the video source is a broadcasting station, it is difficult for the display apparatus to conduct time shifting on videos transmitted from the broadcasting station. However, when the video source is a streaming server, the display apparatus may perform time shifting on streaming videos with ease according to a user's control. For example, the display apparatus may provide a content video desired by a user from a convenient time to the user through two-way communication with a streaming server and may receive and display videos provided from various video sources.

According to an aspect of the present invention a control method of a display apparatus includes: displaying a plurality of videos provided from a video source; generating and storing at least one selectable still image from the plurality of provided videos; displaying the at least one at least one selectable still image; and receiving a streaming video, which corresponds to a selected still image from the at least one displayed selectable still image, from a server and displaying the streaming video based on metadata derived from the selected still image.

The displaying the streaming video may include calculating an identification value of the selected still image based on a preset algorithm and transmitting the calculated identification value to the server; and receiving the streaming video from the server via streaming transmission based on the metadata corresponding to the identification value from the server.

The calculating the identification value may include dividing the still image into a plurality of sections and deriving a video characteristic value from each section; and calculating the identification value by calculating an average of the derived video characteristic values.

The video characteristic values may include a brightness level or a color level.

The server may include a metadata server storing the metadata and a streaming server providing the streaming video corresponding to the metadata.

The receiving the streaming video from the server may include receiving the metadata corresponding to the identification value from the metadata server; and receiving the streaming video corresponding to the received metadata from the streaming server.

The metadata may include content information about the provided video and information about a cutting time of the selected still image from the at least one still image corresponding to the plurality of provided videos, and the displaying the received streaming video may include displaying the streaming video corresponding to the content information and streamingly transmitted from the server starting from the cutting time.

The generating and storing the at least one selectable still image from the provided video may include receiving a command, which generates the selectable still image, from a user input unit of the display apparatus while the provided video is displayed; and generating the selectable still image by cutting the provided video at a time when the command is received.

According to an aspect of the present invention, a display apparatus includes: a display unit; a communication unit which communicates with a server; a storage unit which stores at least one selectable still image of a video provided from a video source; and a video processor which displays the at least one selectable still image stored in the storage unit on the display unit to be selectable, receive a streaming video corresponding to a selected still image from the displayed still image through the communication unit, and display the received streaming video on the display unit based on metadata derived from the selected still image.

The video processor may calculate an identification value of the selected still image based on a preset algorithm, transmits the calculated identification value through the communication unit, and receives the streaming video through the communication via streaming transmission based on the metadata corresponding to the identification value.

The video processor may divide the still image into a plurality of sections to derive a video characteristic value from each section and calculate the identification value by calculating an average of the derived video characteristic values.

The video characteristic values may include a brightness level or a color level.

The communication unit may communicate with a metadata server storing the metadata and a streaming server providing the streaming video corresponding to the metadata, respectively, and the video processor may receive the metadata corresponding to the identification value from the metadata server and receive the streaming video corresponding to the received metadata from the streaming server.

The metadata may include content information about the provided video and information about a cutting time of the selected still image from the provided video, and the video processor may display the streaming video corresponding to the content information and streams the video from the video server from the cutting time through the communication unit.

The display apparatus may further include a user input unit which receives input of a command to generate the selectable still image, and the video processor may generate a selectable still image at a time when the command is received by cutting the provided video at the time according to the command input through the user input unit while the provided video is displayed..

According to another aspect of the present invention a control method of a display apparatus includes: displaying a video from a video source; generating and storing a selectable still image from the video; displaying the selectable stored still image; selecting a selectable still image and transmitting selected still image identification information to a first server; receiving a streaming content video, which corresponds to the selected still image identification information, from a second server; and displaying the streaming content video.

The above and/or other aspects will become apparent and more readily appreciated from the following description of the exemplary embodiments, taken in conjunction with the accompanying drawings, in which:
FIG. 1 is a block diagram illustrating a configuration of a display apparatus according to an exemplary embodiment;
FIG. 2 illustrates a plurality of still images displayed on the display apparatus of FIG. 1 according to an exemplary embodiment;
FIG. 3 illustrates a method of calculating an identification value of a still image by the display apparatus of FIG. 1 according to an exemplary embodiment;
FIG. 4 is a diagram illustrating receiving a streaming video corresponding to a still image by the display apparatus of FIG. 1 according to an exemplary embodiment;
FIG. 5 is a flowchart illustrating a method of storing a still image by the display apparatus of FIG. 1 according to an exemplary embodiment;
FIG. 6 is a flowchart illustrating a method of displaying a streaming video corresponding to a still image by the display apparatus of FIG. 1 according to an exemplary embodiment;
FIG. 7 is a diagram illustrating an example of receiving a streaming video corresponding to a still image by a display apparatus according to another exemplary embodiment; and
FIG. 8 is a diagram illustrating an example of receiving a streaming video corresponding to a still image by a display apparatus according to another exemplary embodiment.

Exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

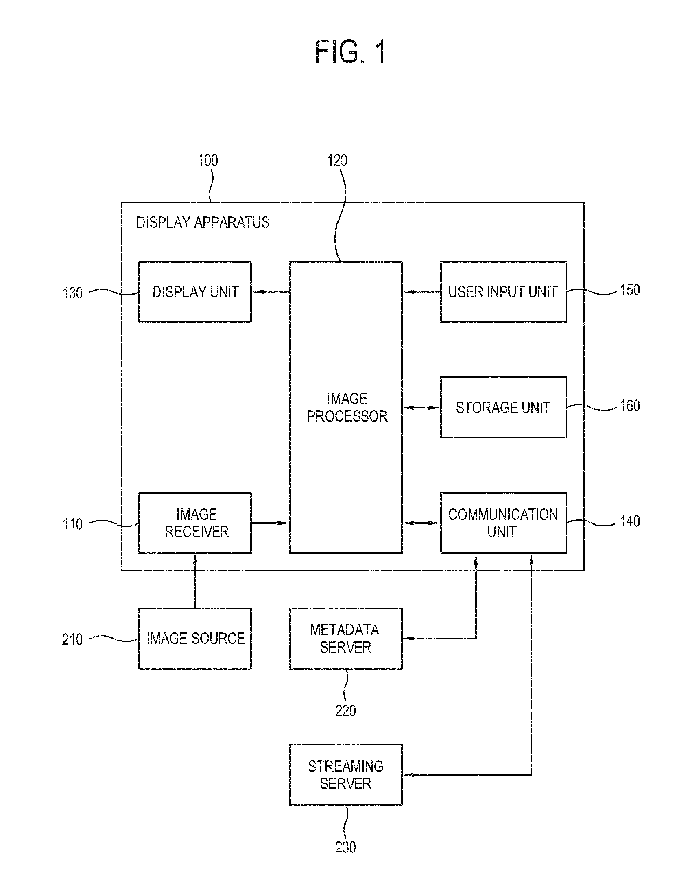

FIG. 1 is a block diagram illustrating a configuration of a display apparatus 100 according to an exemplary embodiment.

As shown in FIG. 1, the display apparatus 100 according to an exemplary embodiment displays videos based on video signals/video data received from a video source 210 and transmits/receives unrestricted data/signals/information to/from a metadata server 220 and a streaming server 230.

The display apparatus 100 according to an exemplary embodiment is configured as a TV. However, the exemplary embodiment is not limited thereto, and the display apparatus 100 may be configured as one of various types of displays which are capable of displaying videos based on video signals/video data and transmitting/receiving data to/from the outside, such as a portable multimedia player and a mobile phone.

Meanwhile, the video source 210 transmits analog/digital video signals to the display apparatus through a wire/wirelessly. For example, the video source 210 is transmitting equipment of a broadcasting station, which provides broadcast signals to the display apparatus 100 through an airwave or a cable network. The display apparatus 100 tunes broadcast signals from this video source 210 and displays broadcast videos.

Hereinafter, each component included in the display apparatus 100 is described.

The display apparatus 100 includes a video receiver 110 receiving video signals from the video source 210, a video processor 120 processing video signals received by the video receiver 110 according to video processing processes, a display unit 130 displaying videos based on video signals processed by the video processor 120, a communication unit 140 communicating with the metadata server 210 and the streaming server 230 and transmitting/receiving unrestricted signals/data/information to/from the servers 220 and 230, a user input unit 150 receiving input of preset commands/information according to an input of a user, and a storage unit 160 accessed by the video processor 120 and storing unrestricted signals/data/information.

The video receiver 110 receives video signals wirelessly/through a wire from the video source 210 and transmits the signals to the video processor 120. The video receiver 110 may be configured as various types corresponding to standards of received video signals and types of the display apparatus 100. For example, when the display apparatus is configured as a TV, the video receiver 110 may receive radio frequency (RF) signals transmitted from broadcasting stations (not shown) or various video signals according to composite/component video, super video, SCART, high definition multimedia interface (HDMI), DisplayPort, unified display interface (UDI) or wireless HD standards. When a video signal is a broadcast signal, the video receiver 110 includes a tuner to tune the broadcast signal of each channel.

The video processor 120 performs various preset video processes on video signals received from the video source 110. The video processor 120 outputs processed video signals to the display panel 130, so that videos based on the corresponding video signals are displayed on the display panel 130.

The video processor 120 may perform, without being limited to, for example, decoding corresponding to a video format of a video signal, de-interlacing to convert an interlaced video signal into a progressive form, scaling to adjust a video signal to a preset resolution, noise reduction to improve video quality, detail enhancement, frame refresh rate conversion, or the like.

The video processor 120 may be provided as an integrated multi-functional component, such as a system on chip (SOC), or as a video processing board (not shown) formed by mounting separate components which independently conduct individual processes on a printed circuit board.

The display unit 130 displays videos based on video signals output from the video processor 120. The display unit 130 may be configured in various display modes using liquid crystals, plasma, light emitting diodes, organic light emitting diodes, a surface conduction electron emitter, a carbon nano-tube, nano-crystals, or the like, without being limited thereto.

The display unit 130 may further include an additional component depending on its display mode. For example, when the display unit 130 is configured in a display mode using liquid crystals, the display unit 130 includes a liquid crystal display panel (not shown), a backlight unit (not shown) providing light to the display panel and a panel driving board (not shown) driving the display panel.

The communication unit 140 is connected to an external network according to a preset wired/wireless protocol and enables the display apparatus 100 to communicate with the metadata server 220 or the streaming server 230 connected to the same network. The communication unit 140 performs two-way communication so that the video processor 120 transmits/receives data to/from the metadata server 220 or the streaming server 230. That is, the video processor 120 controls the communication unit 140 to transmit data stored in the storage unit 160 to the metadata server 220 or the streaming server 230, or to transmit data received from the metadata server 220 or the streaming server 230 to the video processor 120.

The user input unit 150 transmits various preset control commands or unrestricted information to the video processor 120 according to a user's manipulation and/or input. The user input unit 150 is configured as a menu key and an input panel installed on the outside of the display apparatus 100 or as a remote controller separate from the display apparatus 100. Alternatively, the user input unit 150 may be configured to be integrated with the display unit 130. That is, when the display unit 130 is a touch screen, a user may transmit a preset command to the video processor 120 through an input menu (not shown) displayed on the display unit 130.

The storage unit 160 stores unrestricted data according to the control of the video processor 120. The storage unit 160 is configured as a nonvolatile memory, such as a flash memory or hard disk drive. The storage unit 160 is accessed by the video processor 120, and reading/ recording/revision/deletion/updating of data are carried out by the video processor 120.

With this configuration, the display apparatus 100 displays videos based on video signals received from the video source 210. However, when the video source 210 is transmitting equipment of a multiple system operator (MSO), such as a broadcasting station, video signals provided from the video source 210 are unilateral signals to the display apparatus 100.

That is, it is difficult for the display apparatus 100 to perform time shifting on videos provided from the video source 210 according to a user's manipulation or input. Time shifting means a function that enables a user to randomly stop a video being played in the display apparatus 100 or to play a desired section of the video at a desired time.

Thus, if the display apparatus 100 can mark a replaying section of a video of content provided from the video source 210 at a particular time while displaying the video and display the video of the same content from the marked section later, a user may conveniently watch the video of the content from a desired section at a convenient time.

Thus, the display apparatus 100 provides convenience to users by adopting the following method.

While a video provided from the video source 210 is displayed on the display unit 130, the video processor 120 generates still images of the provided video corresponding to a time when an event happens according to a preset event and stores the still images in the storage unit 160. Generation of still images may be carried out at each time an event occurs as a plurality of events occur while the provided video is played. The video processor 120 stores a plurality of still images generated in the storage unit 160.

Here, the preset event may include various cases, for example, an instance that the video processor 120 receives a preset command through the user input unit 150 to generate still images of a provided video while the provided video is displayed on the display unit 130.

Further, a method of generating still images may employ various algorithms of capturing videos, without being particularly limited.

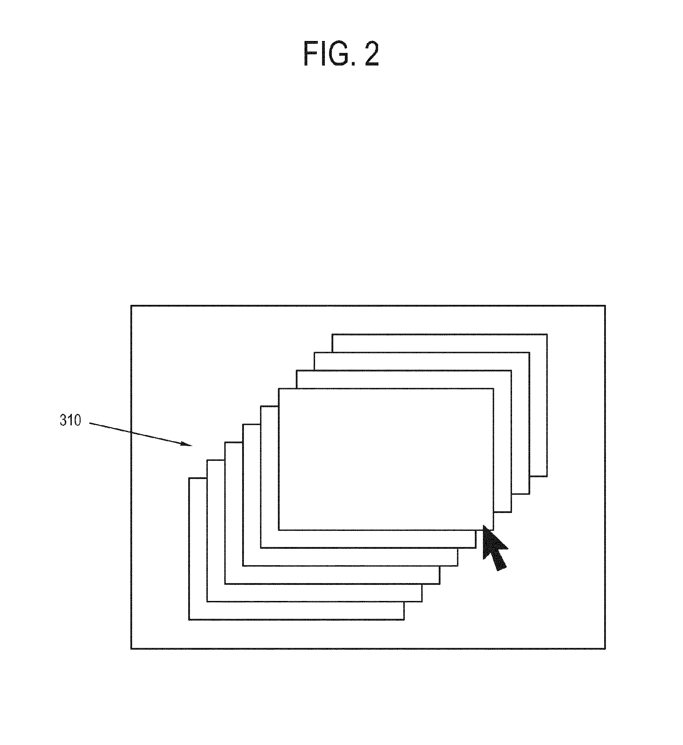

When receiving a command requesting display of a still image through the user input unit 150, the video processor 120 displays a plurality of still images 310 stored in the storage unit 160 on the display unit 130 to be selectable, as shown in FIG. 2.

FIG. 2 illustrates an example of a plurality of still images 310 displayed on the display unit 130.

As shown in FIG. 2, each of the still images 310 stored in the storage unit 160 is a static video obtained by capturing the provided video displayed above on the display unit 130 at each specific playing time. Thus, the still images 310 include information about the content video, so that a user may easily identify information about content at a time when a corresponding still image 310 is generated.

The plurality of still images 310 are displayed on the display unit 130 to allow a user to select through the user input unit 150.

Here, the still images 310 may be displayed in various ways, without being particularly limited. For example, the still images 310 are arranged in a linear cascade form in FIG. 2 but may be arranged in a curved or circular form. Alternatively, the respective still images 310 may be arranged in manner in which they are not overlapping each other.

A user selects any one of the displayed still images 310 through the user input unit 150.

The video processor 120 calculates an identification value of the selected still image 310 from the still image 310 based on a preset algorithm.

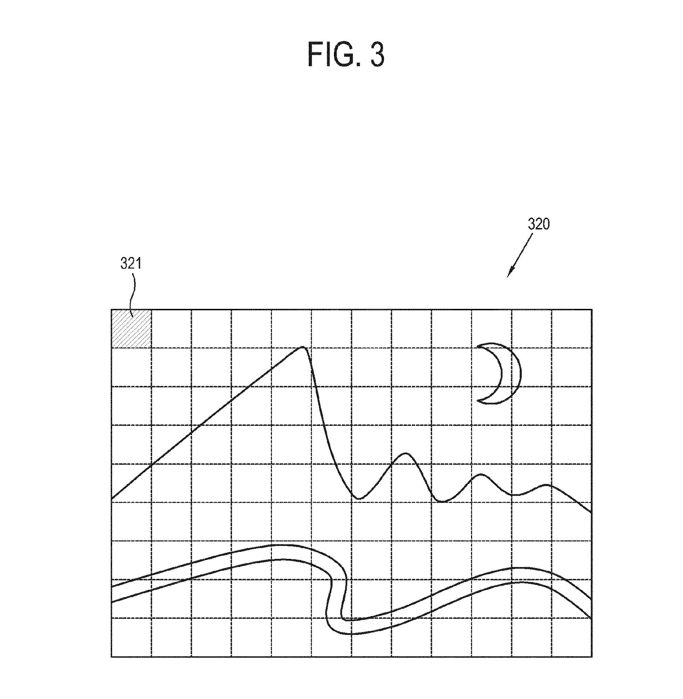

FIG. 3 illustrates a method of calculating an identification value of a still image 320.

Various algorithms of calculating a unique identification value from a still image 320 may be adopted, without being particularly limited. That is, any algorithm may be employed so as to calculate an identification value of a still image 320 which is to distinguish the still image 320 from another still image in the same content video or a still image of another content video. For example, an identification value may be obtained by application of fingerprint technology.

For example, when any one still image 320 is selected from a provided video shown in FIG. 2, the video processor 120 divides the selected still image 320 into a plurality of sections 321.

The video processor 120 derives a video characteristic value from a video of each section 321. This video characteristic value may be selected from various characteristics of the video included in the section 321, for example, a brightness level or a color level, such as Red, Green, and Blue (RGB) values.

When a video characteristic value is derived from each section 321, the video processor 120 calculates an average of a plurality of video characteristic values according to various mathematical algorithms, thereby calculating an identification value.

The video processor 120 transmits the calculated identification value to the metadata server 220.

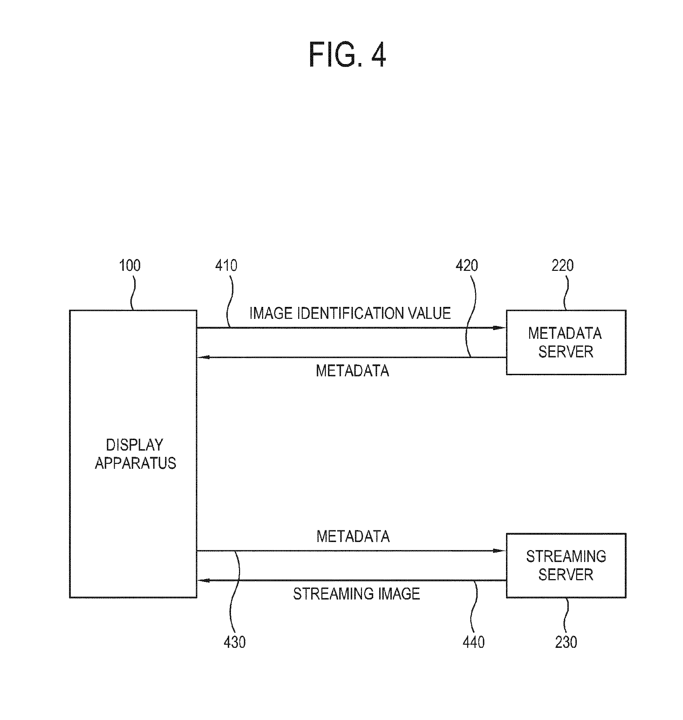

FIG. 4 is a diagram illustrating an example of the display apparatus 100 receiving a streaming video corresponding to a still image.

As shown in FIG. 4, the display apparatus transmits an identification value of a selected still image calculated corresponding to the still image to the metadata server 220 (410).

The metadata server 220 stores identification values of still images of various content videos and a database of metadata corresponding to the respective identification values.

The metadata includes various types of information about still images. According to an exemplary embodiment, the metadata includes content information about a video provided as a source of generated still images, and information about cutting times of the provided video. That is, the metadata includes information about content associated with a still image of a particular content video and a time when the still image is generated.

When receiving an identification value from the display apparatus 100, the metadata server 220 retrieves metadata corresponding to the identification value from the database. Then, the metadata server 220 transmits the retrieved metadata to the display apparatus (420).

The display apparatus 100 transmits the metadata received from the metadata server 220 to the streaming server 230.

The streaming server 230 sets up a content video database and provides streaming videos of various content. Unlike the video source 210, the streaming server 230 controls streaming transmission of videos to the display apparatus 100 according to a request from the display apparatus 100. That is, the display apparatus 100 conveniently performs time shifting on videos provided from the streaming server 230.

When receiving the metadata from the display apparatus 100, the streaming server 230 reads content information and a playing time from the metadata. The streaming server 230 retrieves a content video corresponding to the content information from the content video database. Then, the streaming server 230 transmits the retrieved content video to the display apparatus 100 (440).

The display apparatus 100 displays the video received from the streaming sever 230.

Here, in transmitting the video to the display apparatus 100, the streaming server 230 streamingly transmits the video from a playing time of the metadata. Accordingly, the display apparatus 100 may display the content video from a playing time of the still image.

As described above, the display apparatus 100 generates and stores at least one still image of a video provided from the video source 210 and displays the stored at least one still image to be selectable. When any one of displayed still images is selected, the display apparatus 100 receives a streaming video corresponding to the selected still image from the streaming server 230. Here, the display apparatus 100 displays the received streaming video based on derived metadata to correspond to the selected still image.

Accordingly, when a user stops watching a content video of the video source 210, which does not provide time shifting, at a particular time, the display apparatus 100 may provide the user with a following section of the same content video from the time later.

An exemplary embodiment illustrates that the display apparatus 100 transmits an identification value of a still image to the metadata server 220 but is not limited thereto. Alternatively, the display apparatus 100 may transmit a still image directly to the metadata server 220.

In this case, the metadata server 220 calculates an identification value from a received still image. A method of calculating an identification value may be adopted from the method of the video processor 120 calculating the identification value, and details thereof are omitted.

When an identification value is calculated, the metadata server 220 retrieves metadata corresponding to the calculated identification value and provides the metadata to the display apparatus 100. Subsequent processes are the same as in the exemplary embodiment described above.

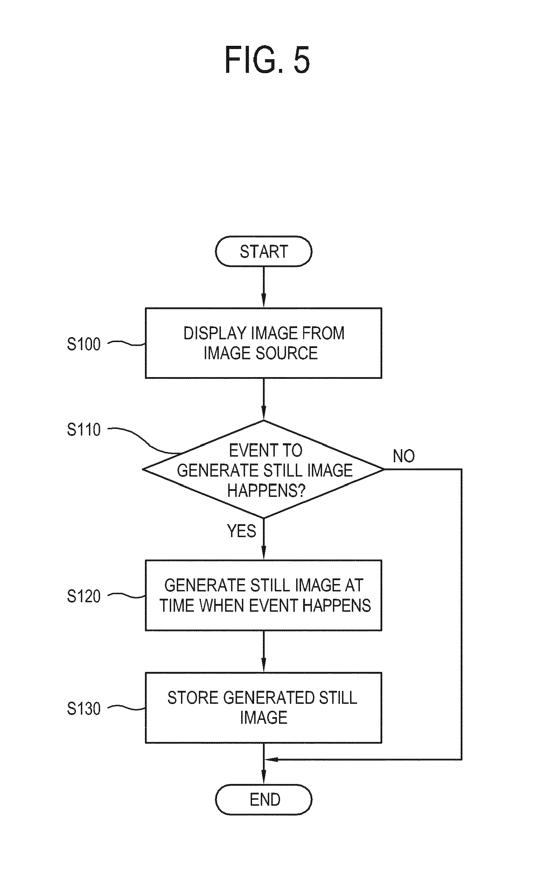

Hereinafter, a method of the display apparatus 100 storing a still image according to an exemplary embodiment is described with reference to FIG. 5. FIG. 5 is a flowchart illustrating a process of storing a still image.

As shown in FIG. 5, the display apparatus 100 displays a video received from the video source 210 (S100).

When an event to generate a still image happens while displaying the video from the video source 210, the display apparatus 100 generates a still image at a time when the event happens with respect to the displayed video (S120).

The display apparatus stores the generated still image (S130).

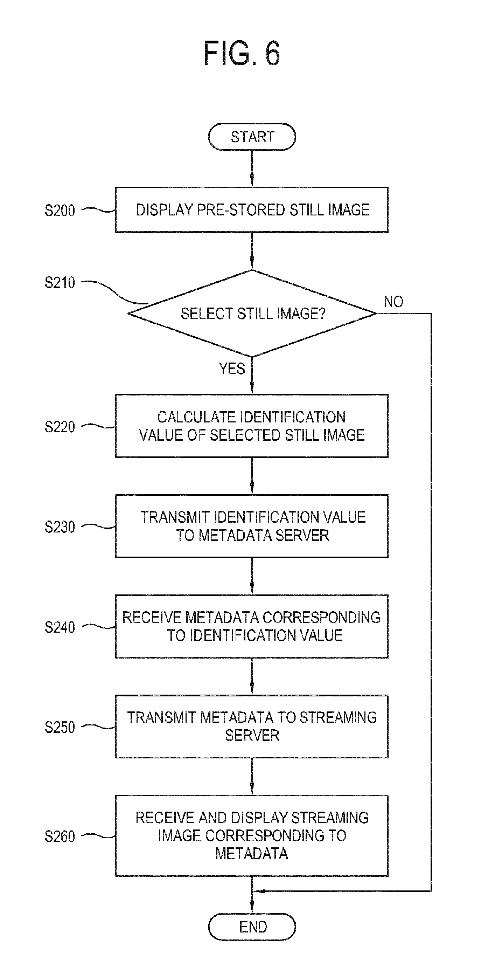

Hereinafter, a method of the display apparatus 100 displaying a streaming video corresponding to a still image according to an exemplary embodiment is described with reference to FIG. 6. FIG. 6 is a flowchart illustrating a process of displaying a streaming video.

As shown in FIG. 6, the display apparatus 100 displays a pre-stored still image according to user's request (S200).

When a still image is selected among a plurality of displayed still images (S210), the display apparatus 100 calculates an identification value of the selected still image (S220).

The display apparatus 100 transmits the calculated identification value to the metadata server 220 (S230) and receives metadata corresponding to the identification value from the metadata server 220 (S240).

The display apparatus 100 transmits the metadata to the streaming server 230 (S250) and receives and displays a streaming video corresponding to the metadata from the streaming server 230 (S260).

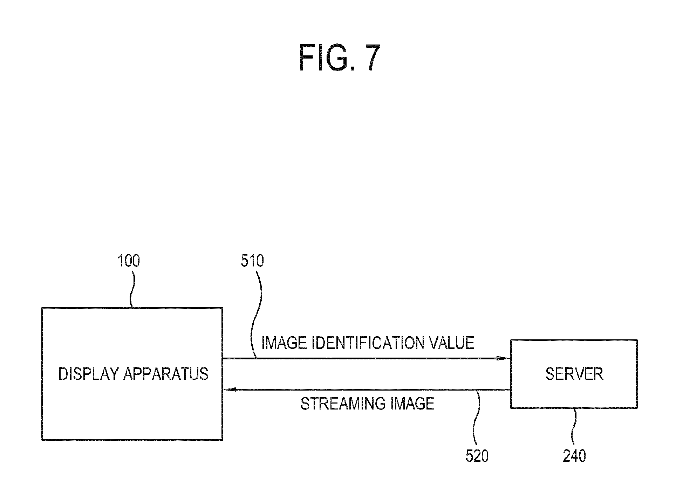

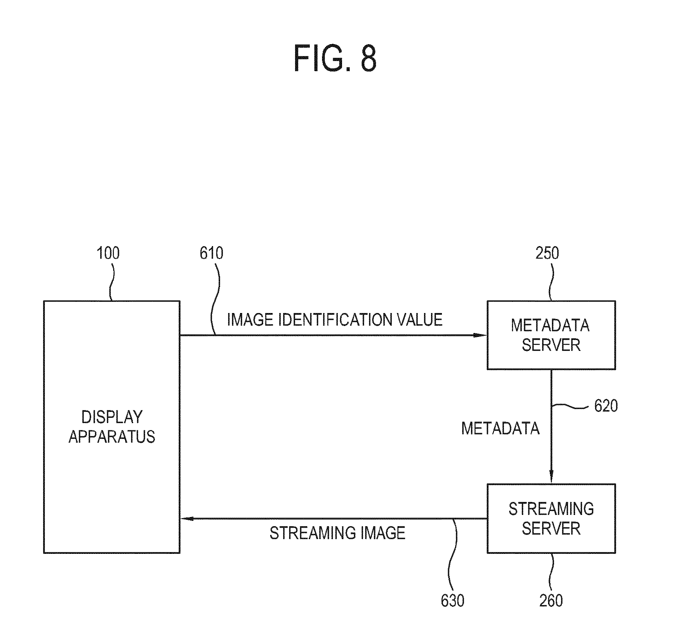

Hereinafter, exemplary embodiments of receiving a streaming video corresponding to a still image according to a different method from in the foregoing exemplary embodiment are described with reference to FIGS. 7 and 8. FIG. 7 is a diagram illustrating an example of receiving a streaming video corresponding to a still image according to another exemplary embodiment, and FIG. 8 is a diagram illustrating an example of receiving a streaming video corresponding to a still image according to another exemplary embodiment.

As shown in FIG. 7, a display apparatus 100 transmits an identification value of a selected still image to a server 240 (510). The display apparatus 100 according to an exemplary embodiment has substantially the same configuration as that in the above exemplary embodiment, and thus details thereof are omitted.

The server 240 includes both metadata corresponding to an identification value of a still image and a database of a streaming video. The server 240 retrieves metadata corresponding to the received identification value and streamingly transmits a content video corresponding to the retrieved metadata to the display apparatus 100 (520).

Meanwhile, as shown in FIG. 8, a display apparatus 100 transmits an identification value of a selected still image to a metadata server 250 (610). Configurations of the display apparatus 100, the metadata server 250 and a streaming server 260 of the present exemplary embodiment may adopt those in the above exemplary embodiment, and thus details thereof are omitted.

The metadata server 250 retrieves metadata corresponding to the received identification value and transmits the retrieved metadata to the streaming server 260 (620).

The streaming server 260 streamingly transmits a content video corresponding to the metadata received from the metadata server 250 to the display apparatus 100 (630).

Accordingly, the display apparatus 100 may display a streaming video corresponding to the selected still image.

Although a few exemplary embodiments have been shown and described, it will be appreciated by those skilled in the art that changes may be made in these exemplary embodiments without departing from the invention, the scope of which is defined in the appended claims.

## Claims

1. A control method of a display apparatus, the method comprising:
displaying a plurality of videos provided from a video source;
generating and storing at least one selectable still image from the plurality of provided videos;
displaying the at least one selectable still image;
receiving a streaming video, which corresponds to a selected still image from the at least one displayed selectable still image, from a server; and
displaying the streaming video based on metadata derived from the selected still image.

2. The control method of claim 1, wherein the displaying the streaming video comprises:
calculating an identification value of the selected still image based on a preset algorithm;
transmitting the calculated identification value to the server; and
receiving the streaming video from the server via streaming transmission based on the metadata corresponding to the identification value from the server.

3. The control method of claim 2, wherein the calculating the identification value comprises:
dividing the still image into a plurality of sections;
deriving a video characteristic value from each section; and
calculating the identification value by calculating an average of the derived video characteristic values.

4. The control method of claim 3, wherein the video characteristic values comprise a brightness level or a color level.

5. The control method of claim 2, wherein the server comprises a metadata server storing the metadata and a streaming server providing the streaming video corresponding to the metadata.

6. The control method of claim 5, wherein the receiving the streaming video from the server comprises:
receiving the metadata corresponding to the identification value from the metadata server; and
receiving the streaming video corresponding to the received metadata from the streaming server.

7. The control method of claim 1, wherein the metadata comprises content information about the provided video and information about a cutting time of the selected still image from the at least one still image corresponding to the plurality of provided videos, and the displaying the received streaming video comprises displaying the streaming video corresponding to the content information and streaming the video from the server starting from the cutting time.

8. The control method of claim 1, wherein the generating and storing the selectable still image from the provided video comprises:
receiving a command, which generates the selectable still image, from a user input unit of the display apparatus while the provided video is displayed; and
generating the selectable still image by cutting the provided video at a time when the command is received.

9. A display apparatus comprising:
a display unit;
a communication unit which communicates with a server;
a storage unit which stores a selectable still image of an video provided from a video source; and
a video processor which displays the selectable still image stored in the storage unit on the display unit, receives a streaming video corresponding to a selected still image from the displayed selectable still image through the communication unit, and displays the streaming video on the display unit based on metadata derived from the selected still image.

10. The display apparatus of claim 9, wherein the video processor calculates an identification value of the selected still image based on a preset algorithm, transmits the calculated identification value through the communication unit, and receives the streaming video through the communication unit via streaming transmission based on the metadata corresponding to the identification value.

11. The display apparatus of claim 10, wherein the video processor divides the still image into a plurality of sections to derive a video characteristic value from each section and calculates the identification value by calculating an average of the derived video characteristic values.

12. The display apparatus of claim 11, wherein the video characteristic values comprise a brightness level or a color level.

13. The display apparatus of claim 10, wherein the communication unit communicates with a metadata server storing the metadata and a streaming server providing the streaming video corresponding to the metadata, and
wherein the video processor receives the metadata corresponding to the identification value from the metadata server and receives the streaming video corresponding to the received metadata from the streaming server.

14. The display apparatus of claim 9, wherein the metadata comprises content information about the provided video and information about a cutting time of the selected still image from the provided video, and
wherein the video processor displays the streaming video corresponding to the content information and streams the video from the server starting from the cutting time through the communication unit.

15. The display apparatus of claim 9, further comprising:
a user input unit which receives an input of a command to generate the selectable still image,
wherein the video processor generates the selectable still image by cutting the provided video at a time according to the command input through the user input unit while the provided video is displayed.
